# EUROPEAN PATENT APPLICATION

(11) **EP 1 914 637 A2**
(43) Date of publication of application: **23.04.2008**
(21) Application number: 07100855.1
(22) Date of filing: 19.01.2007
(51) Int. Cl.: G06F 15/78

(54) **Network on chip (noc) response signal control apparatus and noc response signal control method using the apparatus**

(30) Priority: 13.09.2006 KR 20060088652
(71) Applicant: Samsung Electronics Co., Ltd., Suwon-si, Gyeonggi-do (KR)
(72) Inventor: Rhim, Sang Woo Samsung Advanced Institute of Tech., Mt., Yongin-si, 449-712 (KR); Kim, Eui Seok Samsung Advanced Institute of Tech., Mt., Yongin-si, 449-712 (KR); Lee, Beom Hak Samsung Advanced Institute of Tech., Mt., Yongin-si, 449-712 (KR)
(74) Representative: Greene, Simon Kenneth

(57) **Abstract**

A network on chip (NoC) response signal control apparatus and an NoC response signal control method using the apparatus are provided. The NoC response signal control apparatus includes: a network interface (NI) slave which outputs an enabling signal for a response signal via a response signal wire if a predetermined response signal is input from a slave intellectual property (IP); and an NI master which outputs a transaction to a master IP by generating the transaction for the response signal if the enabling signal is input via the response signal wire which is directly connected to the NI slave.

## Description

### BACKGROUND OF THE INVENTION

Apparatuses and methods consistent with the present invention relate to a network on chip (NoC) response signal control, and more particularly, to NoC response signal control which can reduce latency, i.e., NoC waiting time, which is generated by the response signal.

The convergence of a computer, communication, broadcasting, and the like has been shifting the demand for an application specific integrated circuit (ASIC) and an application specific standard product (ASSP) into the demand for a system-on-chip (SoC). As the SoC industry is developing, an information technology (IT) device is becoming smaller, lighter, simpler, and more highly functioned.

The SoC is a semiconductor technology of integrating all components or other electronic system into a single chip. Various technologies related to the SoC have been studied. Particularly, a method of connecting many intellectual properties (IPs) which are embedded in a chip is considered critical.

A connection method based on a bus is a mainly used to connect the IPs. However, as a degree of integration of the chip becomes higher and an amount of information flow between the intellectual properties increases, the SoC using the bus structure is reaching its design limitations.

To overcome the design limitations, an NoC technology has been proposed. The NoC connects the IPs by applying a general network technology within a chip.

The NoC is a network style on-chip interconnect (OCI) to overcome the design limitation of the SoC. Through the NoC, fast, energy-efficient, and high performance of the SoC may be embodied.

However, the NoC requires a large amount of latency in order to transmit packets between IPs. Specifically, a large amount of latency is required when a master network interface (NI) packetizes a signal generated from a master IP, e.g., read/write address signals and a write data signal, to transmit to a slave IP, and when a slave NI packetizes the signal generated from a slave IP, e.g., a read data signal and a response signal, to transmit to the master IP.

Namely, a large amount of latency is required when the packet generated from the master IP is transmitted to the slave IP, and when the response signal for the packet generated from the slave IP is transmitted to the master IP.

In a related art, there is a method which can reduce the latency for the packets by making a path that directly connects routers with each other. However, in the related art method, wire complexity and a gate count increase since many routers are directly connected.

Also, a response time of an NoC is greater than a response time of an advanced extensible interface (AXI) interconnect when comparing the response times of the AXI interconnect with the NoC. Specifically, nine clocks are required for the NoC response time while one clock is required for the response time of the AXI interconnect.

Therefore, an apparatus and method that can reduce latency while keeping complexity to a minimum, is required.

### SUMMARY OF THE INVENTION

Exemplary embodiments of the present invention provide an NoC response signal control apparatus and an NoC response signal control method which can reduce latency of a response signal to a write a transaction generated from a master IP.

Exemplary embodiments of the present invention also provide an NoC response signal control apparatus and an NoC response signal control method using the apparatus which can minimize manufacturing costs while reducing latency of a response signal.

Exemplary embodiments of the present invention also provide an NoC response signal control apparatus and an NoC response signal control method using the apparatus which can reduce latency of a packet by reducing wire complexity.

According to an aspect of the present invention, there is provided an NoC response signal control apparatus including: an NI slave outputting an enabling signal for the response signal via a response signal wire when a predetermined response signal is input from a slave IP; and an NI master outputting a transaction to a master IP by generating the transaction for the response signal when the enabling signal is input via the response signal wire, directly connected to the NI slave.

According to another aspect of the present invention, there is provided an NoC response signal control method including: outputting an enabling signal for the response signal via a response signal wire when a predetermined response signal is input from a slave IP; outputting a transaction to a master IP by generating the transaction for the response signal when the enabling signal is input to an NI master via the response signal wire, directly connected to the NI slave.

In this case, the response signal wire may be a one-bit wire.

In this case, a type of the transaction is an AXI transaction.

In this case, the outputting of the transaction to the master IP by generating the transaction for the response signal when the enabling signal is input to the NI master via the response signal wire, directly connected to the NI slave generates the transaction for the response signal additionally using a write address ID (aWID) signal, input from the master IP, and outputs the transaction for the generated response signal to the master IP.

### BRIEF DESCRIPTION OF THE DRAWINGS

The above and other aspects of the present invention will become apparent and more readily appreciated from the following detailed description of certain exemplary embodiments of the invention, taken in conjunction with the accompanying drawings of which:
FIG. 1 is a block diagram illustrating a configuration of an NoC response signal control apparatus according to an exemplary embodiment of the present invention;
FIG. 2 is a block diagram illustrating a configuration of an NI slave of FIG. 1;
FIG. 3 is a block diagram illustrating a configuration of an NI master of FIG. 1;
FIG. 4 is a diagram illustrating an example where an NoC response signal control apparatus according to an exemplary embodiment of the present invention is applied to a local area of an NoC router;
FIG. 5 is a waveform diagram illustrating comparison of response latency of a related art with response latency according to an exemplary embodiment of the present invention;
FIG. 6 is a flowchart illustrating an NoC response signal control method according to an exemplary embodiment of the present invention;
FIG. 7 is a flowchart illustrating operation S610 of FIG. 6; and
FIG. 8 is a flowchart illustrating operation S620 of FIG. 6.

### DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to the like elements throughout. The exemplary embodiments are described below in order to explain the present invention by referring to the figures.

A transaction in this specification may include an AXI transaction, an advanced microcontroller bus architecture (AMBA) high-performance Bus (AHB) transaction, and an open core protocol (OCP) transaction, however only the AXI transaction will be described in the detailed description of the exemplary embodiments.

Generally, a response AXI transaction output from an NI master to a master IP include a four-bit bID signal, a two-bit BResp signal and a one-bit BValid signal.

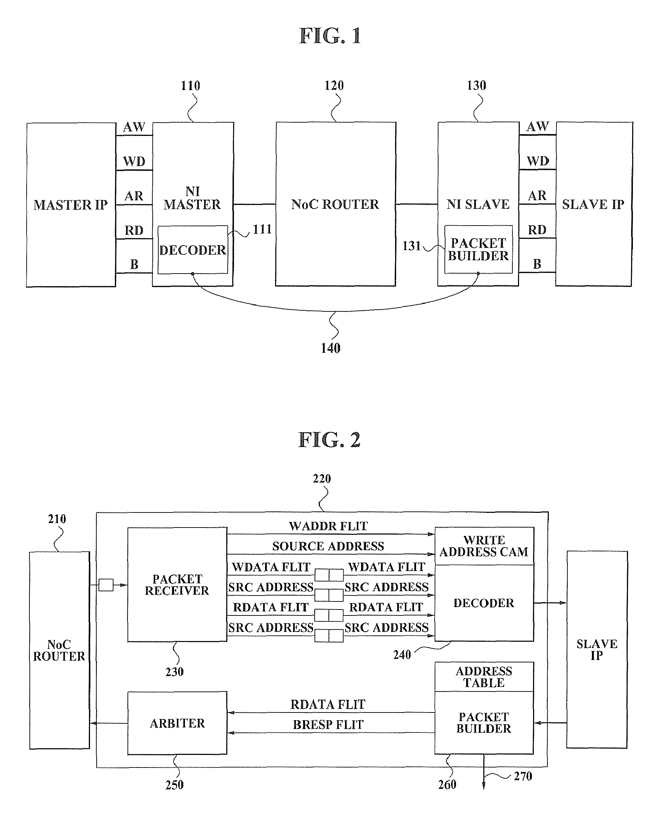

FIG. 1 is a block diagram illustrating a configuration of an NoC response signal control apparatus according to an exemplary embodiment of the present invention.

Referring to FIG. 1, the NoC response signal control apparatus include an NI master (NIM) 110, an NoC router 120, and an NI slave (NIS) 130.

The NIM 110 receives an AXI transaction generated from a master IP, e.g., a read address, a write address, and write data, converts the received AXI transaction into an NoC packet, outputs the converted NoC packet to the NoC router 120, and outputs a response transaction B to the master IP when an enabling signal for a response signal is input from a response signal wire 140 directly connected to the NIS 130.

In this case, the response signal wire 140 may be a one-bit wire, and the NIM 110 receives an enabling signal for the response signal via the one-bit response signal wire.

In this case, the response signal wire 140 is directly connected to a decoder 111 in the NIM 110, and the decoder 111 outputs to the master IP when the enabling signal for the response signal is input to the decoder 111 by generating a response transaction additionally using an aWID signal included in the AXI transaction, input from the decoder 111 to the NIM 110. Namely, the decoder 111 generates the response AXI transaction, using the four-bit bID information as the aWID signal stored in the NIM 110.

The NoC router 120 outputs the NoC packet input from the NIM 110 to the NIS 130 and outputs the NoC packet input from the NIS 130 to the NIM 110.

The NIS 130 receives a read packet or a write packet from the NoC router 120, converts the received packet into a read AXI transaction or a write AXI transaction and outputs the read AXI transaction or the write AXI transaction to the slave IP, and outputs an enabling signal for the response signal to NIM 110 via the one-bit response signal wire 140 when an 'Okay' response signal for the AXI transactions, generated from the master IP, is input from the slave IP. An existing process is performed when the 'Okay' response signal is not input from the slave IP, however, a description regarding the existing process will be omitted in the specification since the existing process would be appreciated by those skilled in the field.

In this case, the response signal wire 140 directly connected to the decoder in the NIM 110 is directly connected to the packet builder 131, the packet builder 131 outputs the enabling signal to the decoder 111 of the NIM 110 via the response signal wire 140 by generating the enabling signal for the response signal without generating the packet for the response signal when the 'Okay' signal is input to the NIS 130.

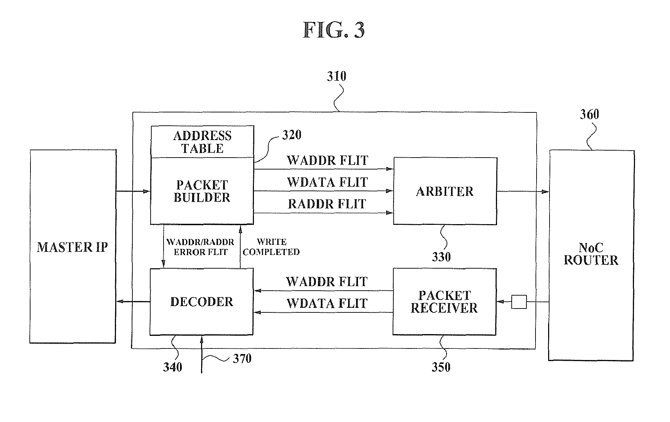

Hereinafter, operations of exemplary embodiments of the present invention having the above configuration will be described by referring to FIGS. 2 and 3. In this case, the AXI transaction, generated from the master IP, passes through the NIM 110 and the NoC router 120, and is transmitted back to the NIM 110 by passing through the NIS 130, e.g., a packet for the read address, the write address AXI transaction, the read data or the write data AXI transaction, is transmitted to the NIM 110 by passing through the NoC router 120. Thus, only an operation of generating a response AXI transaction for a write AXI transaction, generated from the master IP, will be described in the specification since above the operations are performed via a related art packet process operation.

FIG. 2 is a block diagram illustrating a configuration of the NIS 220 of FIG. 1.

Referring to FIG. 2, the NIS 220 includes a packet receiver 230, a decoder 240, a packet builder 260, and an arbiter 250.

The packet receiver 230 transmits a flit type signal or a packet type signal, input from an NoC router 210, to a corresponding flit channel.

The decoder 240 outputs the converted AXI transaction to a slave IP by converting the flit into an AXI transaction corresponding to the flit for the each flit channel. In this case, the decoder 240 includes a write address content addressable memory (CAM) combining a write address packet with a write data packet.

The arbiter 250 selects one flit input from the packet builder 260 to output the one flit to the NoC router 210.

The packet builder 260 outputs the converted AXI transaction to the arbiter 250 by converting the AXI transaction for the response signal and the read data input from the slave IP into the flit type or the packet type. The packet builder 260 according to the present exemplary embodiment determines whether the input response signal is 'Okay' when the response signal is input from the slave IP, and when it is 'Okay', and is outputting an enabling signal, e.g., '1', for the response signal to a response signal wire 270 by activating the one-bit response signal wire 270, directly connected to the packet builder 260. In this case, the response signal is generated by a handshake of a BReady signal and BValid signal, and the enabling signal for the response signal indicates that a BResp signal is 'Okay' and the BValid signal is 'High'.

In this case, the enabling signal for the response signal is output to the decoder 240 in the NIM 110 of FIG. 1, connected to the response signal wire 270.

In this case, the packet builder 260 according to the present exemplary embodiment operates by exclusively determining the response signal input from the slave IP, and transmits other signals via the NoC router 210 by identically converting the other signals, which are not frequently occurring, e.g., an EXOKAY, a SLVERR, a DECERR, into a conventional packet type.

FIG. 3 is a block diagram illustrating a configuration of the NIM 310 of FIG. 1.

Referring to FIG. 3, the NIM 310 includes a packet builder 320, an arbiter 330, a packet receiver 350, and a decoder 340.

Descriptions of the arbiter 330 and the packet receiver 350 will be omitted in the present specification since the arbiter 330 and the packet receiver 350 perform the same function as the arbiter 250 and the packet receiver 230 in FIG. 2.

The packet builder 320 transmits the read address, the write address or the write data AXI transaction to the arbiter 330 by converting a read address, a write address or a write data AXI transaction into a flit type or a packet type, corresponding to each channel.

The decoder 340 outputs the converted AXI transaction to a master IP by converting the flit into an AXI transaction corresponding to the flit for the each channel. The decoder 340 according to the present invention is directly connected with the packet builder 260 of the NIS 220 of FIG. 2 via a response signal wire 370, and outputs the generated response AXI transaction to the master IP by generating a response AXI transaction using an aWID signal, included in a WADDR error flit, when an enabling signal for an response signal is input to the response signal wire 370, the aWID signal is being stored in the packet builder 320 to check an address error. In this case, when the enabling signal for the response signal is input to the decoder 340, this indicates a BResp signal is 'Okay' and a BValid signal is 'High', the decoder 340 outputs the response AXI transaction signals to the master IP by generating the response AXI transaction signals for a two-bit BResp signal, a one-bit BValid signal, and a four-bit bID signal, i.e., the aWID signal, included in the WADDR error flit.

As described above, latency of a response signal may be reduced since the response AXI transaction for the write AXI transaction, generated from the master IP, does not pass through the arbiter of the NIS, the NoC router, and the packet receiver of the NIM, the NIM generates the response transaction by directly receiving the enabling signal for the response signal from the NIS via the response signal wire, and the generated response AXI transaction is transmitted to the master IP.

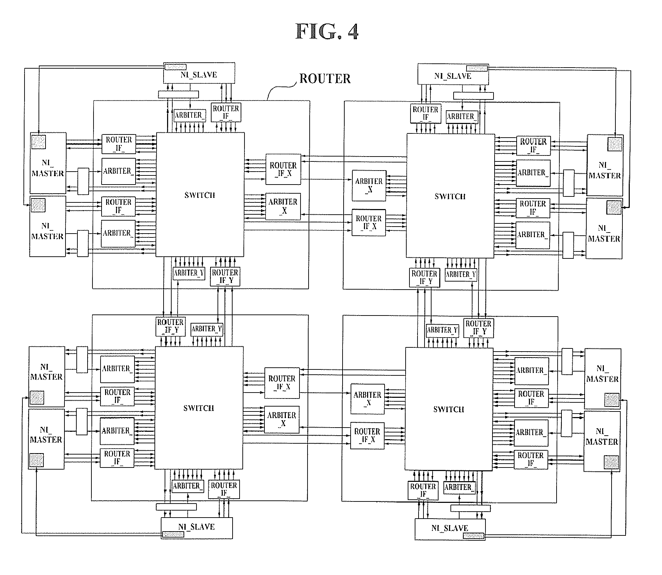

FIG. 4 is a diagram illustrating an example where an NoC response signal control apparatus according to an exemplary embodiment of the present invention is applied to a local area of an NoC router.

As illustrated in FIG. 4, the NoC response signal control apparatus is applied to the NIM and NIS which are both connected to the same router. Namely, wire complexity may be minimized and latency of a response signal may be reduced since the NoC response signal control apparatus according to the present invention may be applied to when data exchange among IPs, connected to the same router, frequently occurs, and only a one-bit response signal wire is directly connected to the NIM and the NIS.

In this case, when communication between IPs, connected to different routers, occurs, i.e., when communication between the IPs occurs outside of the local area part, it is clear that the operation is performed via a conventional process operation.

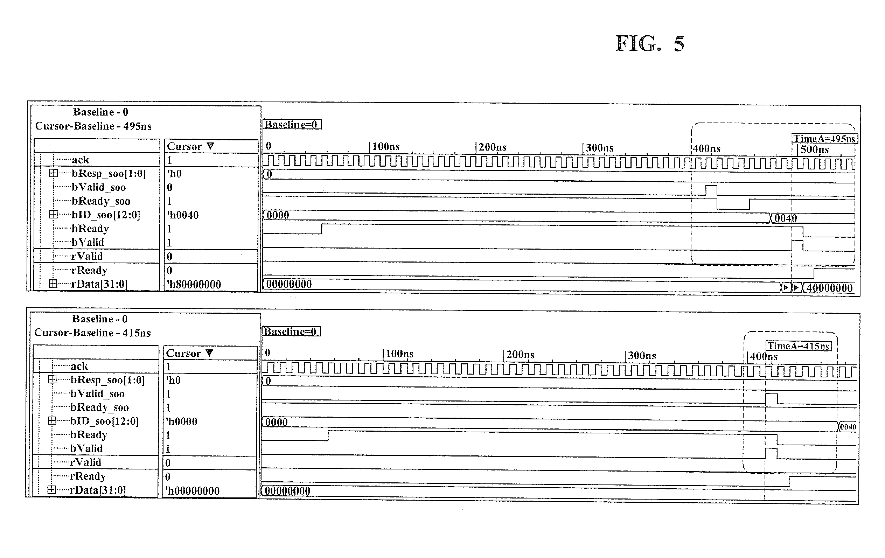

FIG. 5 is a waveform diagram illustrating comparison of response latency of a related art with response latency according to an exemplary embodiment of the present invention, and the waveform diagram illustrates response latency between IPs, connected to an identical router.

As illustrated in FIG. 5, a response latency of 415 ns according to an exemplary embodiment of the present invention is less than a response latency of 495 ns according to the related art. Thus, the more frequently data exchange between IPs occurs, the more the response latency becomes reduced, and consequently, the entire response latency becomes reduced.

Also, the present invention may be applied to the local area, and may also be applied to a global area. Specifically, the NoC response signal control apparatus may be configured by directly connecting a one-bit response signal wire between all NISs and one NIM, configuring the NoC, and by directly connecting a one-bit response signal wire between all NIMs and one NIS, configuring the NoC. In this case, since the response signal wire is applied to the global area, latency for the response signal may be reduced since the enabling signal for the response signal is output via the response signal wire without passing though the router when communicating between the IPs, connected to a different router.

In this case, when the present exemplary embodiment is applied to the global area, wire complexity may increase and an occupying area may increase, therefore application to the global area may be applied only when the latency will have a great effect on an efficiency of the system.

When the present invention is applied to the global area, it is clear that a required number of response signal wires is a number of the NIMs multiplied by a number of the NISs, configuring the NoC.

On the other hand, when the NIM according to the present invention supports multiple outstanding mode, the enabling signal for the response signal does not arrive to the decoder of the NIM in an order of the write address occurring, therefore the aWID signal, included in the WADDR error flit information, illustrated in FIG. 3 may not be used when the one-bit response signal wire is used.

Thus, when the NIM supports the multiple outstanding mode, a five-bit response signal wire is required to be used to directly receive the four-bit bID information from the NIS. Specifically, the packet builder of the NIS outputs the enabling signal for the five-bit response signal, including the four-bit bID information, to the decoder of the NIM when an 'Okay' response signal is input from the slave IP to a packet builder of the NIS.

As described above, according to the present invention, response latency may be reduced since the decoder of the NIM and the packet builder of the NIS, configuring the NoC, are directly connected to the one-bit or the five-bit response signal wire, and the decoder of the NIM generates the response AXI transaction to output the generated response AXI transaction to the master IP without passing through the arbiter of the NIS, the NoC router, and the packet receiver of the NIM when the enabling signal for the response signal is generated.

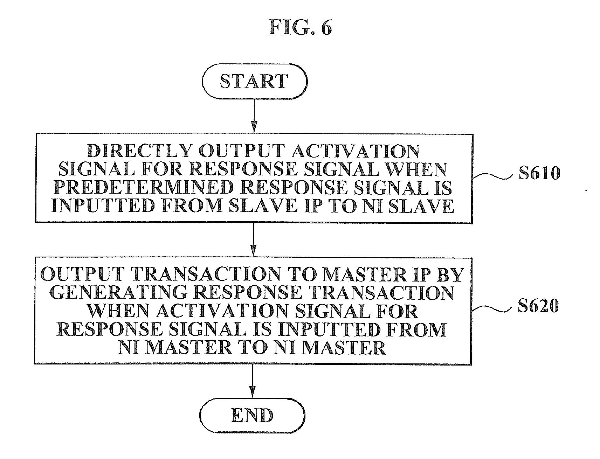

FIG. 6 is a flowchart illustrating an NoC response signal control method according to an exemplary embodiment of the present invention.

Referring to FIG. 6, in operation S610, in the NoC response signal control method according to the present invention, an NIS directly outputs an enabling signal for an input response signal to an NIM when the response signal is input from a slave IP.

In this case, the enabling signal for the response signal is directly output to the NIM when the 'Okay' response signal is input from the slave IP.

In this case, the enabling signal for the response signal is output via a response signal wire, where the NIS and the NIM are directly connected.

In this case, the response signal wire may be a one-bit wire.

In this case, the response signal wire may be a five-bit wire, and the enabling signal for the response signal may include a four-bit bID signal when the NIM supports multiple outstanding mode.

In operation S620, the NIM outputs a response transaction to a master IP by generating a transaction for the response signal when the enabling signal for the response signal is input from the NIS.

In this case, a size of the response transaction is seven bits, when the enabling signal for the response signal is input, a two-bit BResp is 'Okay' and a one-bit BValid is 'High', the NIM generates a four-bit bID signal using an aWID signal input from the master IP, and also generates the transaction for the response signal by generating a two-bit BResp signal and a one-bit BValid signal using the enabling signal for the response signal.

In this case, a four-bit bID signal is input from the NIS when the response signal wire, where directly connecting the NIM and the NIS, is five-bit, therefore the NIM generates the response transaction for the response signal by generating the two-bit BResp signal and the one-bit BValid signal according to the enabling signal for the response signal.

A related art process operation is performed when the NIS is required to output the response signal to the NIM to which the response signal wire is not connected. Specifically, when the response signal wire is exclusively connected between the NIM and the NIS, both connected to the same router, and when communication between IPs, connected to different routers, occurs, the response signal is performed via a related art process operation since the response signal wire is not connected to between the NIM connected to the master IP and the NIS connected to the slave IP.

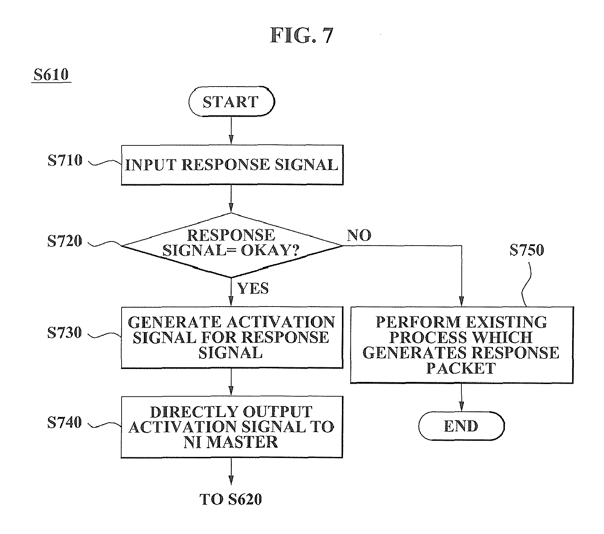

FIG. 7 is a flowchart illustrating operation S610 illustrated in FIG. 6.

Referring to FIG. 7, the NIS determines whether the input response signal is 'Okay' in operation S720, when the response signal is input from slave IP in operation S710. In this case, the response signal is generated by a handshake of the BReady signal and the BValid signal.

In operation S750, a response packet is generated when the response signal is not 'Okay', and the generated response packet is output to the NIM via an NoC router.

Conversely, when the response signal is 'Okay', an enabling signal for the response signal is generated in operation S730. In this case, the enabling signal for the response signal indicates a BResp signal is 'Okay' and BValid signal is 'High'.

In operation S740, the NIS outputs the enabling signal for the response signal to the NIM via a one-bit response signal wire, where the NIS and the NIM are directly connected.

In this case, when the NIS and the NIM are directly connected to a five-bit response signal wire, a four-bit bID signal is included in the enabling signal for the response signal, and an enabling signal for the five-bit response signal is output to the NIM. In this case, a one-bit of the five-bit response signal wire may be used as a wire for the NIM to determine whether the enabling signal for the response signal is input.

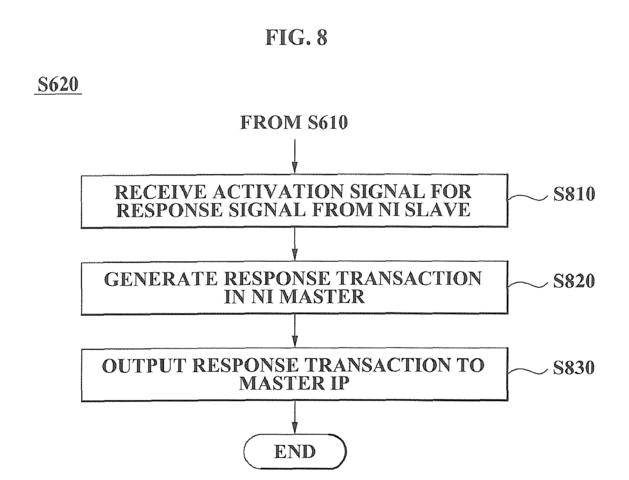

FIG. 8 is a flowchart illustrating operation S620 illustrated in FIG. 6.

Referring to FIG. 8, the NIM generates a response AXI transaction in operation S820 when the enabling signal for the response signal is input from the NIS via the response signal wire in operation S810.

In this case, a response AXI transaction is generated using an aWID signal, stored for checking an address error, when the response signal wire is a one-bit wire. Specifically, bID information of the response AXI transaction uses the aWID signal, when the enabling signal for the response signal is input indicates that a BResp signal is 'Okay', and a BValid signal is 'High'. Thus, a four-bit bID signal, i.e., the aWID signal, the response transaction signal including a two-bit BResp signal and one-bit BValid signal is generated.

In this case, when the NIM supports multiple outstanding mode, the response AXI transaction including a four-bit bID signal included in the enabling signal, the 2bit BResp signal and one-bit BValid signal indicating the enabling signal for the response signal is input are generated since the four-bit bID information is included in the enabling signal for the response signal, received via a five-bit response signal wire.

In operation S830, the response AXI transaction generated from the NIM is output to the master IP, and communication between IPs is terminated.

The above described flowchart may be performed in the decoder in the NIM.

The NoC response signal control method according to the above-described embodiment of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention.

According to exemplary embodiments of the present invention there is provided an NoC response signal control apparatus and an NoC response signal control method that can reduce latency of a response signal since an enabling signal for the response signal is output to an NIM via a response signal wire directly connected to an NIS, and a response transaction is output to a master IP by generating the response transaction from the NIM.

Also, according to exemplary embodiments of the present invention, latency of a response signal of an NoC can be reduced and manufacturing costs can be minimized by using a response signal wire, directly connecting an NIS and an NIM.

Also, according to exemplary embodiments of the present invention, latency of a packet can be reduced since wire complexity is comparatively lower.

Although a few exemplary embodiments of the present invention have been shown and described, the present invention is not limited to the described exemplary embodiments. Instead, it would be appreciated by those skilled in the art that changes may be made to these exemplary embodiments without departing from the principles of the invention, the scope of which is defined by the claims and their equivalents.

## Claims

1. A network on chip, NoC, response signal control apparatus comprising:
a network interface, NI, slave (130) which is adapted to output an enabling signal for a response signal via a response signal wire (140) if a predetermined response signal is input from a slave intellectual property, IP; and
an NI master (110) which is adapted to output a transaction to a master IP by generating a transaction for the response signal if the enabling signal is input via the response signal wire (140) which is directly connected to the NI slave (130).

2. The apparatus of claim 1, wherein the response signal wire (140) is a one-bit wire.

3. The apparatus of claim 2, wherein the transaction is an advanced extensible interface transaction.

4. The apparatus of claim 3, wherein the NI master (150) is adapted to generate the transaction for the response signal using a write address identification, aWID, signal which is input from the master IP, when the enabling signal is input.

5. The apparatus of claim 3 or 4, wherein the NI master (110) is adapted to output an enabling signal for the response signal via the response signal wire (140) if an 'Okay' response signal is input from the slave IP.

6. The apparatus of any of claims 2 to 5, wherein the response signal wire (140) is arranged to directly connect a decoder (111) in the NI master (110) to a packet builder (131) in the NI slave (130).

7. The apparatus of claim 1, wherein the response signal wire (140) is a five-bit wire if the NI master (110) is adapted to support multiple outstanding mode.

8. The apparatus of claim 7, wherein the enabling signal includes a four-bit bID signal if the transaction is an advanced extensible interface transaction.

9. The apparatus of any preceding claim, wherein the transaction is one of an advanced microcontroller bus architecture high-performance bus transaction, and an open core protocol transaction.

10. A network on chip, NoC, response signal control method comprising:
outputting an enabling signal for a response signal via a response signal wire (140) if a predetermined response signal is input from a slave intellectual property, IP;
outputting a transaction to a master IP by generating the transaction for the response signal if the enabling signal is input to a network interface, NI, master (110) via the response signal wire (140) which is directly connected to an NI slave (130).

11. The method of claim 10, wherein the response signal wire (140) is a one-bit wire.

12. The method of claim 11, wherein a type of the transaction is an advanced extensible interface transaction.

13. The method of claim 12, wherein the outputting the transaction comprises:
generating the transaction for the response signal using an aWID signal which is input from the master IP, and
outputting the transaction for the generated response signal to the master IP.

14. The method of claim 12 or 13, wherein the outputting the enabling signal comprises outputting the enabling signal for the response signal via the response signal wire (140) if an 'Okay' response signal is input from the slave IP.

15. The method of any of claims 11 to 13, wherein the outputting of the enabling signal comprises outputting the enabling signal, which is generated by a packet builder (131) in the NI slave (130), to a decoder (111) in the NI master (110) via the response signal wire (140) if the response signal is input from the slave IP to the NI slave (130).

16. The method of claim 10, wherein the response signal wire is a five-bit wire if the NI master (110) is adapted to support multiple outstanding mode.

17. The method of claim 16, wherein the enabling signal includes a four-bit bID signal if the transaction is an advanced extensible interface transaction.

18. The method of any of claims 10 to 17, wherein the transaction is one of an advanced microcontroller bus architecture high-performance bus transaction, and an open core protocol transaction.

19. A computer program comprising program code means adapted to perform all of the steps of any of claims 10 to 18 when said program is run on a computer.

20. A computer program as claimed in claim 19 embodied on a computer readable medium.
